# EUROPEAN PATENT APPLICATION

(11) **EP 4 807 205 A1**
(43) Date of publication of application: **16.09.2026**
(21) Application number: 26158392.6
(22) Date of filing: 13.02.2026
(51) Int. Cl.: F16C 19/38, F03D 80/70, F16C 23/08, F16C 33/46, F16C 33/48, F16C 33/54, F16C 41/04

(54) **LARGE SCALE SPHERICAL ROLLER BEARING HAVING RADIALLY OFFSET CAGE BARS**

(30) Priority: 11.03.2025 CN 202510283383
(71) Applicant: Aktiebolaget SKF, 415 50 Göteborg (SE)
(72) Inventor: Weigand, Stefan Manfred, 97517 Rannungen (DE); Hofmann, Sabine, 97273 Kürnach (DE); Reichert, Juergen, 97499 Donnersdorf (DE); Fritz, Dominik, 97074 Würzburg (DE); Ramachandran, Sankar, 43145 Mölndal (SE); Sahlgren, Johan, 43136 Mölndal (SE); Jolkin, Alexei, 41574 Göteborg (SE); Freden, Jens Håkan, 44930 Nödinge (SE); Du, Longnian, Dalian, 116600 (CN); Qian, Weihua, Shanghai, 201800 (CN); Zhu, Jinguang, Dalian, 116092 (CN)
(74) Representative: Kuhstrebe, Jochen

(57) **Abstract**

Disclosed is a spherical roller bearing, particularly for supporting a wind turbine main shaft, comprising an outer ring, an inner ring with a bore diameter of at least 499 mm, two sets of spherical rollers running on raceways, and at least one cage retaining the rollers. The cage includes at least one axial inner cage ring extending circumferentially, a first axial outer cage ring on a first axial side, and a second axial outer cage ring on the opposite side. Each outer cage ring is connected to the inner cage ring by cage bars, forming closed pockets that each receive one spherical roller of the respective roller set. The cage bars are arranged at least partially at a radial position offset from a pitch diameter. At least one retention element securely holds the rollers within the pockets.

## Description

### Technical field of the invention

The present invention relates to a large scale spherical roller bearing for supporting a main shaft of a power plant turbine, e.g. of a wind turbine or a tidal stream turbine, having radially offset cage bars. Furthermore, the present invention relates to a bearing arrangement for a power plant turbine comprising such a spherical roller bearing.

### Background of the invention

Rolling bearings are common mechanical components for many different applications. There are different types of rolling bearings that are designed to meet different requirements. Depending on the conditions of the particular application, i.e., the load level, the rotational speed, the temperature, etc., there are different types of suitable rolling bearings.

A common type of bearing is a spherical roller bearing. The bearing is designed to accommodate large radial loads and axial loads, and it is also designed to accommodate flexing of a shaft supported by the bearings, i.e., the bearing rings can be relatively misaligned. Therefore, such bearings are particularly suitable for more demanding industrial applications such as machines in wind turbines and the like.

In order to support larger loads, it is necessary to increase the basic dynamic load rating (also denoted as C) of the bearing. Generally, the basic dynamic load rating of the bearing may be influenced by a variety of parameters such as the material of the bearings and/or rolling elements, the number of rolling elements in one row, the number of rows, a contact angle, a diameter of the rolling elements, an effective rolling element length, etc. But most of these parameters cannot be adapted without the necessity of adapting the bearing rings. Adapting the bearing rings in material, geometry and/ dimension, however, can be costly.

It has been therefore suggested to equip spherical roller bearing, particularly for wind main shaft application with a double prong cage which is double drilled (under pitch and over pitch guided), wherein the inner ring of the spherical roller bearing has a retaining flange.

Therefore, the rollers cannot fall out of the composition of the inner ring cage and roller if the outer ring is swiveled out.

In another embodiment, the spherical roller bearing is combined with a sheet metal cage which is under pitch guided, which allows the roller to roller distance to be decreased and the number of rollers per row to be increased. This increases the basic dynamic load rating C of the bearing.

However, this cage design does not retain the rollers to the inner ring unit. If the outer ring is swiveled out, all rollers will fall out. Swiveling out of the outer ring, however, might be necessary in order to check the raceways before assembly or for exchanging rollers during maintenance.

For small sized spherical roller bearing with in pitch guided cages it is known to have a self-retaining lug on the cage which acts to a roller dimple on a roller side face or to the roller raceway and the spherical roller element is snapped into the cage. Large sized cages, as required for wind turbines, however, need a thicker sheet metal, which would not allow to snap the spherical roller bearing into the cage. Therefore, it is not possible to copy this assembly method to these cages. The tolerances for manufacturing are hard to control and the deformation of the cage could lead to high stress and damage on rollers.

It is therefore object of the present invention, to provide a spherical roller bearing having an increased basic dynamic load rating, but which prevents the rollers from falling out even if the outer ring is swiveled out.

### Summary of the invention

This object is solved by a spherical roller bearing for supporting a main shaft of a wind turbine according to claim 1.

In the following, a large scale spherical roller bearing for supporting a main shaft of a power plant turbine, particularly of a wind turbine or a tidal stream turbine, is provided.

The large scale spherical roller bearing comprises at least an outer ring, an inner ring, and two set of spherical rollers which are rolling along raceways formed on the outer and inner ring, and at least one cage configured to retain the rollers. Also, the spherical rollers may comprise raceways which are configured to roll upon the raceways formed on the inner ring and the outer ring. The inner ring has a bore with a diameter of at least 499mm, preferably at least 699mm, and even more preferred at least 899mm. The bore may be adapted to receive a component of another machine, for example a shaft of a wind turbine.

The inner ring may be formed with or without flanges on an axial inner side and/or an axial outer side. If the inner ring is equipped with flanges, flanges may be used as guide flanges for the roller elements. Furthermore, they may also serve as retaining flanges for preventing the rollers from axially falling out of the bearing.

The at least one cage comprises at least one axial inner cage ring extending in a circumferential direction of the bearing, a first axial outer cage ring spaced from the at least one axial inner cage ring on a first axial side and connected to it with a plurality of cage bars thereby forming closed pockets, wherein each pocket is configured to receive one spherical roller of the first set of rollers, and a second axial outer cage ring spaced from the at least one axial inner cage ring on a second axial side opposite of the first axial side and connected to it with a plurality of cage bars thereby forming closed pockets, wherein each pocket is configured to receive one spherical roller of the second set of rollers.

Furthermore, for increasing the load bearing capacity of the spherical roller bearing, the cage bars are at least partially arranged at a position in a radial direction that is at least partially offset to a pitch diameter. Preferably the cage is under pitch guided, which means that the cage bars are arranged at a position in a radial direction that is below the pitch diameter. Thereby, the term "pitch diameter" describes the diameter on which the center points of the spherical rollers will run during operation.

For preventing the rollers from falling out of the cage, the inventors have suggested to provide the at least one cage with at least one retention element for securely holding the spherical rollers in the pockets of the at least one cage.

Thereby, the retention element may be designed in such a way that the spherical rollers are retained when the outer ring is swiveled out, e.g. for maintenance, but are allowed to move freely, when the bearing is in operation.

According to a preferred embodiment, the at least one retention element is integrally formed with the at least one cage. Thereby, the retention element can already be provided during manufacturing of the cage so that no further and costly steps for providing the cage with retention elements are necessary.

Alternatively, or additionally, the at least one retention element is provided as a separate component that can be attached to the at least one cage. This allows for a simple mounting of the retention elements to the cage. Furthermore, this also allows for existing cages to be retrofitted with such retention elements.

Preferably, the at least one retention element extends from the at least one cage rings. This allows interaction with the roller element at a side face of the roller element or with the raceways of the roller elements.

According to a further embodiment, the retention element interacts with the raceway of at least one spherical roller element, wherein in particularly the retention element extends at least partially in an axial direction parallel to the cage bars, wherein the partially extending region of the retention element is positioned at a distance from the pitch diameter (P) on the side opposite to the cage bar, preferably at a radially outer position of the pitch diameter. This allows a simple "snap-in" procedure for mounting the rollers into the cage. Additionally, as the retention element extends axially along a raceway of the spherical rollers a risk of dislocation or misalignment of the spherical roller within the cage pockets may be reduced.

Thereby, it is also possible that the retention element is formed as an "auxiliary" cage where all axially extending retention elements are mounted to an auxiliary cage ring, which in turn can be attached to one of the cage rings. In case the spherical rollers are under pitch guided by the "ordinary" cage, the auxiliary cage may be designed to prevent the rollers from falling out when the outer ring is swiveled out and/or guide the spherical rollers above the pitch diameter.

According to a further embodiment, between two adjacent spherical roller elements a single retention element is arranged.

Preferably, a circumferential thickness of the at least one retention element is adapted to allow the spherical rollers to move freely when the spherical roller bearing is in operation, while securely holding them within the pockets of at least one cage, when the outer ring is swiveled out, e.g. for maintenance. For providing sufficient clearance between the retention element and the spherical rollers, the circumferential thickness of the retention element is adjusted, so that the spherical rollers can roll freely without any interference from the retention element while still being securely held in the cage pockets. This allows for a one retention element to secure both adjacent roller elements, which simplifies the cage design.

According to a further preferred embodiment, the retention element may comprise multiple brackets or frames attached to the at least one cage rings, wherein each bracket or frame is adapted to hold one or two or multiple spherical rollers. This also allows for the roller elements to be snap-into the pockets of the cage.

According to a further embodiment, the at least one retention element interacts with at least one side face of the spherical rollers. The interaction of the retention element on the side face of the spherical rollers enables easy replacement or removal of individual spherical rollers from the pocket while securely holding the remaining spherical rollers within the pockets, especially, when the outer ring is swiveled from the inner ring during maintenance.

According to a further embodiment, at least one side face of at least one spherical roller is equipped with a roller dimple. Further, the retention element extends axially from at least one of the cage rings and is adapted to engage with the at least one roller dimple of the spherical rollers.

The retention element interacting with a side face and particularly with the roller dimple of the roller element may be a lug, screw, bolt, or fastener.

Thereby, it is particularly preferred that the retention elements are at least partially elastically/plastically deformable, this allows for an undisturbed mounting of the spherical rollers into the pocket. Subsequently, after the spherical rollers are accommodated in the pockets, the retention elements may be deformed from a first position in which they are not extending into the pocket into a second position in which they extend into the pocket and particularly into the dimples at the side faces of the spherical rollers. This allows for an easy, but secure mounting of the roller elements in the pockets.

However, also the retention element which interact with the raceways of the spherical roller elements may be at least partially deformable so that the spherical roller may be snaped between two adjacent retention elements.

Moreover, the cage bars of the at least on cage may be at least partially arranged at a distance from the raceway of the inner or outer ring in the radial direction that corresponds to 10 to 40 % of a diameter of a spherical roller, or 60 to 90% of the diameter of the spherical roller, respectively.

In particular, the cage bars may be at least partially arranged on a radially inner side of the pitch diameter.

Furthermore, at least one cage bar may be arranged such that more than half of a cage bar length in the axial direction or even the entire axial cage bar length is arranged offset to the pitch diameter. For example, the at least one cage bar may be arranged such that more than half of its axial length or even its entire axial length is in a radially inner side or a radially outer side of the pitch diameter. Moreover, a plurality of the cage bars or even all cage bars may be arranged such that more than half of their axial length or even their entire axial length are in a radially inner side or a radially outer side of the pitch diameter.

Arranging the cage bars at least partially at a position in a radial direction that is offset to a pitch diameter may allow to decrease a distance between two neighboring rollers such that it may be possible to increase the number of rollers in a set of rollers. In addition, arranging the cage bars at least partially at a position in a radial direction that is offset to a pitch diameter may allow to increase the width of the cage bar even with very small roller distances. More particularly, increasing the number of rollers in the set of rollers may have the advantage that the basic dynamic load rating of the spherical roller bearing can be increased without the necessity of adapting the outer ring and/or inner ring of the bearing.

According to a further embodiment, the at least one cage may be made from sheet metal.

Using sheet metal as the base material for the at least one cage may have the advantage of reducing the costs for the at least one cage.

Alternatively, the cage may be made from a casted material or machined from a solid material.

According to a further embodiment, the pockets may be formed by pressing and coining and/or milling.

Preferably, the inner ring is not provided with a flange configured to retain and/or guide the spherical rollers.

By providing the retention element on at least one cage or parts of the cage, such as by providing only at one of the axial outer cage rings, the spherical rollers can be securely held within the pockets without the necessity of additional guiding and retaining flanges on the inner rings or on another axial outer cage ring to retain the spherical rollers. Consequently, the manufacturing time may be reduced since the machining of the flanges is not needed. Also, the stresses in the inner ring or the cage may be reduced as no undercut has to be formed in the inner ring or at least one of the axial outer cage rings to form the retaining flange. Thus, the costs and/or the needed amount of raw material for the inner ring or cage can be reduced.

According to a further embodiment, the spherical roller bearing is not equipped with a guide ring.

A guide ring or mid rip flange is usually used to limit a roller skew in an unloaded zone of the spherical roller bearing such that the spherical rollers enter the loaded zone of the spherical roller bearing with a limited skew. This is particularly necessary in high-speed application. Usually, wind main shaft applications are low speed applications with a rotational speed of 15RPM or lower. This allows to omit a guide ring.

According to a further embodiment, a ratio Dm/Dw of a minimal distance Dm in the circumferential direction between the raceways of two neighboring spherical rollers of at least one set of spherical rollers to a maximal roller diameter Dw is equal to or below 0.11, preferably 0.09, and even more preferred 0.075, when the spherical rollers of the at least one set of spherical rollers are equally spaced in the circumferential direction.

Reducing the distance between two rollers in the circumferential direction allows to increase the number of rollers in the set of rollers. For example, it may be possible to increase the number of rollers in the set of rollers by at least one. This may allow to increase the basic dynamic load rating of the spherical roller bearing. Moreover, increasing the number of rollers in the set of rollers by at least one may have the advantage of significantly increasing the service life of the spherical roller bearing. Furthermore, the ratio Dm/Dw of the minimal distance Dm in the circumferential direction between the raceways of two neighboring spherical rollers of the first set of rollers to the maximal roller diameter Dw, when the spherical rollers of the first set of rollers are equally spaced in the circumferential direction, may be equal to or different than the ratio Dm/Dw of the minimal distance Dm in the circumferential direction between the raceways of two neighboring spherical rollers of the second set of rollers to the maximal roller diameter Dw, when the spherical rollers of the second set of rollers are equally spaced in the circumferential direction.

When the spherical rollers of at least one set of spherical rollers are equally spaced in the circumferential direction, a minimal distance Dm in the circumferential direction between the raceways of two neighboring spherical rollers of the at least one set of spherical rollers may be equal to or below a value obtained by the following equation: $Dm \leq 0.0064 mm ⋅ {\left(ln \left(P⋅Dw+Dw\right)\right)}^{3}$ wherein P is the pitch diameter and Dw is the maximal roller diameter, wherein the millimeter values of P and Dw are to be used as dimensionless variables. Moreover, the minimal distance Dm in the circumferential direction between the raceways of two neighboring spherical rollers of the first set of rollers, when the spherical rollers of the first set of rollers are equally spaced in the circumferential direction, may be equal to or different than the minimal distance Dm in the circumferential direction between the raceways of two neighboring spherical rollers of the second set of rollers, when the spherical rollers of the second set of rollers are equally spaced in the circumferential direction.

According to a further embodiment, each set of spherical rollers may comprise the same number of spherical rollers. Preferably, each set of spherical rollers may comprise the maximal number of spherical rollers.

Fitting the spherical roller bearing with the maximal number of spherical rollers, may allow to increase the basic dynamic load rating of the spherical roller bearing.

According to a further embodiment, the axial inner cage ring and/or at least one of the axial outer cage rings may include a flange element that extends radially inward or radially outward.

Having a flange element that extends radially inward or radially outward may allow to limit cage deformations if strong forces act on the at least one cage causing the cage to deform.

According to a further embodiment, the axial inner cage ring and at least one of the axial outer cage rings may include a radially extending flange element, wherein both flange elements extend radially inward or radially outward.

Having both cage rings equipped with a radially extending flange element may lead to an additional increase of a stiffness of the cage. This benefits in a lower deformation of the cage and a better cage performance.

According to a further embodiment, the axial inner cage ring and at least one of the axial outer cage rings may include a radially extending flange element, wherein one flange element extends radially inward, and the other flange element extends radially outward.

Having one flange element extends radially inward and the other flange element extends radially outward may lead to a significant increase of the stiffness. This allows to decrease the deformation of the cage even further and may allow for a better cage performance.

According to a further embodiment, a shoulder clearance is larger than a radial cage clearance.

In particular, the shoulder clearance may be defined as the difference of a bore diameter of the cage ring and a diameter of the inner ring at a position of the cage ring. By designing the cage such that the shoulder clearance is larger than the radial cage clearance, it is possible to make the cage is roller guided.

For example, the shoulder clearance may be designed such that it is between 1 and 15 mm larger than the radial cage clearance, if the cage bore diameter up to 1200mm. In case the cage bore diameter is larger than 1200mm, the shoulder clearance may be designed such that it is between 1 and 20 mm larger than the radial cage clearance.

Moreover, the radial cage clearance may be in the range of 0.2 to 5mm, preferably between 0.5 to 3mm. The radial cage clearance may be measured by the maximal radial movement of the at least one cage inside the bearing.

According to a further embodiment, the at least one cage is predominantly roller guided.

The term "predominantly roller guided" refers to a case in which the cage is usually roller guided, but in cases in which the cage is deformed, for example due to high forces acting on the cage, the deformation may be limited by the cage bore. This may limit the extreme loads on the cage. This guiding principle may also be called "mixed guidance." Alternatively, the at least one cage may be just roller guided. In other words, even if the cage deforms, the cage is designed in such a way that no contact between the cage rings and the inner or outer ring occurs. Roller guided and/or predominantly roller guided cages may have the advantage that they may experience less wear compared to shoulder guided cages. This may result in less particles in the bearing, which can lead to an increased service life.

In another alternative design, the at least one cage may be predominantly shoulder guided at the cage bore and/or supported on a mid-rib or guiding flange of the inner ring.

According to a further embodiment, each pocket of the at least one cage is adapted to limit a skew of the spherical roller accommodated in the pocket.

Limiting the skew of the spherical roller in the pocket may reduce a contact force generated by the roller contacting the cage. This may further lead to a reduced wear on the at least one cage.

For example, the skew of the roller in the pocket may be limited by a radial cage clearance. In addition or alternatively, the roller skew may be limited by an axial cage pocket clearance. In particular, the axial cage pocket clearance may be between 0.2 and 2.5mm, preferably between 0.5 and 2 mm, or even more preferred between 0.7 to 1.5 mm.

According to a further embodiment, each cage bar may be provided with a contact surface configured to contact the spherical roller, wherein the contact surface may be positioned at a circumferential side face of each cage bar.

Furthermore, the contact surface may be provided with a radius. This allows that if the roller is skewed and/or moves in the axial direction, the contact between the roller and the contact surface may be still tangential with reduced contact loads. This may result in a decreased risk of wear.

According to a further embodiment, a circumferential side face of each cage bar may be provided in the axial direction with one contact area.

For example, the circumferential side face of each cage bar may be provided with an osculation between the cage bar and the roller. The osculation, which is the radius on cage bar divided by a crowning radius of the roller, may be between 100% and 104%. This may lead to a reduction of the contact stresses compared to a straight cage bar.

According to a further embodiment, a circumferential side face of each cage bar may be provided in the axial direction with at least two contact areas configured to contact the roller.

Preferably, the contact areas may be located adjacent to the side faces of the roller. Having at least two contact areas may reduce roller skew. Furthermore, at least two contact areas may have the advantage that stress on the at least one cage may be reduced. In particular, when a point of contact between the roller and the cage bar is as close as possible to the cage rings, a bending moment of the cage bar may be reduced, resulting in reduced stress within the at least one cage.

According to a further embodiment, the axial inner cage ring may comprise a first ring element and a second ring element which are separated from each other. This may have the advantage that two separate cages are formed which may allow for one set of rollers to have a different rotational speed than the other row.

Preferably, the axial inner cage ring is arranged on an axially inner side of the spherical roller bearing such that a gap is formed at least partially between the first ring element and the second ring element. This has an advantage that the gap may act like a funnel that transports the lubricant to the inner ring of the spherical roller bearing.

According to a further embodiment, the inner cage ring may comprise a first ring element and a second ring element which are fixed to each other. This may have the advantage that the at least one cage may be formed by two identical cages that are fixed to each other. This may allow for an easier manufacturing process for the at least one cage.

According to a further aspect, a bearing arrangement for a power plant turbine main shaft is provided, wherein the bearing arrangement includes at least one large scale spherical roller bearing as described above.

All features described above with respect to the spherical roller bearing apply - separately or in combination - to the spherical roller bearing used in the bearing arrangement.

Further preferred embodiments are defined in the dependent claims as well as in the description and the figures. Thereby, elements described or shown in combination with other elements may be present alone or in combination with other elements without departing from the scope of protection.

### Brief description of the drawings

In the following, preferred embodiments of the invention are described in relation to the drawings, wherein the drawings are exemplarily only, and are not intended to limit the scope of protection. The scope of protection is defined by the accompanied claims, only.

The figures show:
Fig. 1: shows a schematic cross section of a large scale spherical roller bearing according a first embodiment,
Fig. 2: shows a perspective view of a further embodiment of a cage for large scale spherical roller bearing,
Fig. 3: shows a schematic cross section of the embodiment of Fig. 2a,
Fig. 4: shows a schematic cross section of a further embodiment of a cage for large scale spherical roller bearing,
Fig. 5: shows a schematic cross section through a further preferred embodiment of a cage for large scale spherical roller bearing,
Fig. 6: shows a schematic cross section of a large scale spherical roller at a maximal diameter of the spherical roller in a cage of the spherical roller bearing according to the first embodiment,
Fig. 7: shows a section of a side view of the large scale spherical roller bearing according to the first embodiment, and
Fig. 8: shows a schematic cross section of the large scale spherical roller bearing according to the further embodiment.

### Detailed description of the invention

In the following same or similar functioning elements are indicated with the same reference numerals.

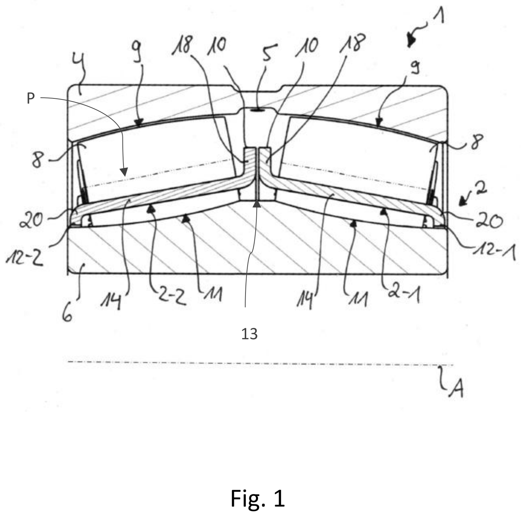

Figs. 1 show a large scale spherical roller bearing 1 for supporting a wind turbine main shaft as well as a part of a cage 2 of the spherical roller bearing 1.

The large scale spherical roller bearing 1 comprises an outer ring 4, and an inner ring 6, two set of spherical rollers 8 which are rolling along raceways 9 formed on the outer ring 4 and on raceways 11 formed on the inner ring 6. The outer ring 4 comprises an opening 5 through which lubricant can be provided to the spherical roller bearing 1. In particular, the outer ring 4 may be stationary, while the inner ring 6 may rotate around a rotational axis A. Furthermore, the inner ring 6 may be configured to be mounted on a main shaft of a wind turbine.

The inner ring 6 may be formed with flanges or without flanges on an axial inner side and/or an axial outer side. The spherical roller bearing shown in Fig. 1 is formed without flanges for guiding and/or retaining the spherical rollers 8 on both the axial inner side and the axial outer side of the inner ring 6.

Furthermore, the large-scale spherical roller bearing 1 comprises a cage 2 configured to retain both sets of spherical rollers 8. The cage of the spherical roller bearing shown in Fig. 1 comprises a first cage element 2-1 configured to retain the first set of spherical rollers 8, and a second cage element 2-2 which are identical in shape and connected to each other to form the cage 2. Each cage element 2-1, 2-2 comprises an axial inner cage ring 10 extending in a circumferential direction of the bearing, an axial outer cage ring 12 axially spaced from the axial inner cage ring 10 and connected to it with a plurality of cage bars 14 thereby forming closed pockets 16. Each pocket 16 is configured to receive one spherical roller 8. Thereby, each cage element 2-1, 2-2 may be integrally formed. Further, both the cage element 2-1, 2-2 may be attached to each other so that the axial inner cage rings 10-1 and 10-2 form a single axial inner cage ring 10.

Further, the axial inner cage ring 10 is arranged on an axial inner side of the large-scale spherical roller bearing 1 forming a gap 13 between the first ring element 10-1, and second ring element 10-2. The gap 13 may act like a funnel that transports the lubricant to the inner ring 6 of the spherical roller bearing 1. Additionally, having two separate cage elements 2-1, 2-2 allows for an embodiment, wherein the first row of spherical rollers 8 retained in the first cage element 2-1 has a different rotational speed than the second row of spherical rollers 8 retained by the second cage element 2-2. This may reduce forces acting on the cage elements 2-1, 2-2 compared to a design in which only one cage is used.

It goes without saying that the first ring element 10-1 and the second ring element 10-2 may also be fixed to each other.

As can be further seen in Fig.1, the cage bars 14 are at least partially arranged at a radial position that is under a pitch diameter P of the spherical roller bearing 1, which means that, the cage bars are arranged at a position in a radial direction that is below the pitch diameter. Further, the axial inner cage ring 10 has a flange element 18 radially to the outside, and the axial outer cage ring 12 has a flange element 20 radially extending to the inside.

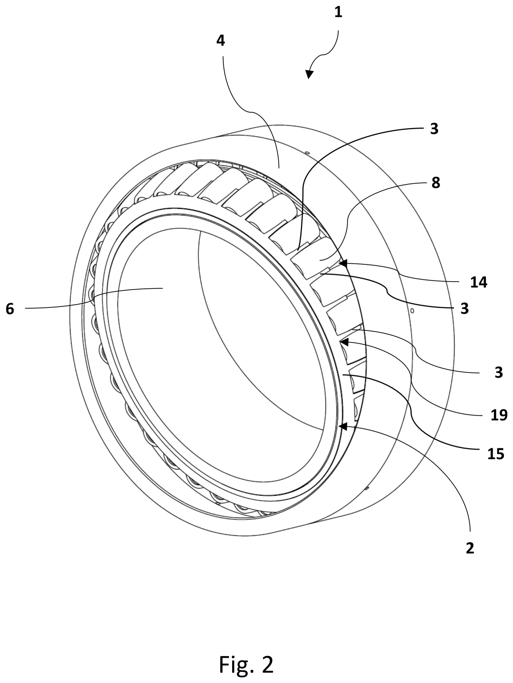

Unfortunately, such under pitched guided spherical roller might fall out if the outer ring is swiveled out, e.g. for maintenance (see e.g. Fig. 2). Therefore, for preventing the spherical rollers from falling out, the at least one cage 2 is provided with retention element 3 (not illustrated in Fig. 1) for securely holding the spherical rollers 8 in the pockets 16 of the at least one cage 2. For the sake of simplicity, the retention elements 3 are not illustrated in the schematic view of Fig. 1 but different embodiments are depicted in Figs. 2 to 5.

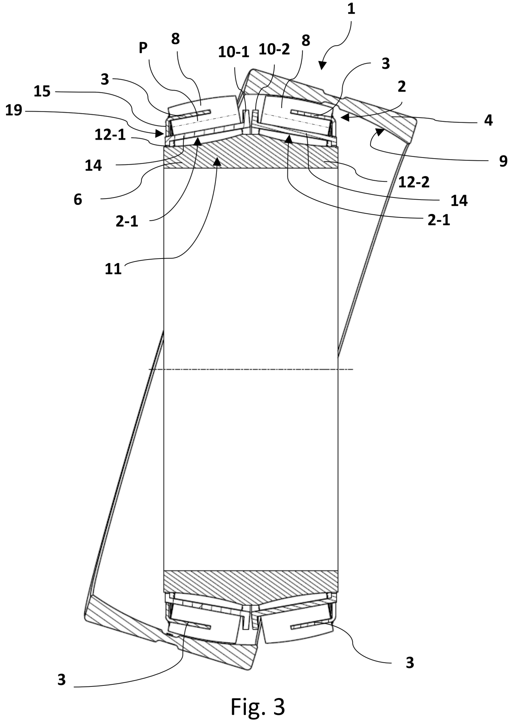

Fig. 2 and Fig. 3 depict a preferred embodiment of a bearing 1 as illustrated in Fig. 1 being equipped with retention elements 3, wherein Fig. 2 illustrates a perspective view and Fig. 3 a sectional view, with the outer ring 4 being swiveled out. The cage 2 of the spherical roller bearing 1 shown in Figs. 2 and 3 is provided with the retention element 3 for preventing the spherical roller 8 from falling out, particularly when the outer ring 4 is swiveled out from the inner ring 6. In the illustrated embodiment, the retention element is designed as an axially extending element, which extends along a raceway of the spherical roller 8 above the pitch diameter P.

To securely attach the retention element 3 to cage 2 without altering the overall structure of the cage 2, an auxiliary cage ring 15 is provided. Auxiliary cage ring 15 as well as retention element 3 may form a so-called auxiliary cage 19 and may form an integral part. In Figs. 2 and 3, the retention element 3 is shown as being integrally formed with the auxiliary cage ring 15. Alternatively, the retention element 3 may be separately attached to the auxiliary cage ring 15 (not shown).

This auxiliary cage ring 15 as well as the attached retention element 3 are configured to be assembled over cage 2, e.g. by sliding the auxiliary cage over the cage 2 from a side face of the bearing. Once the auxiliary cage ring 15 is assembled over cage 2, the retention element 3 extends partially in the axial direction and interacts with the raceway to position itself between two adjacent spherical rollers 8. Thus, the retention element 3 securely holds the spherical rollers 8 within pockets 16, while still allowing the spherical rollers 8 to move freely without any interference.

Additionally, a thickness of retention elements 3 may be adjusted to provide sufficient clearance between the retention elements 3 and the adjacent spherical rollers 8 so that in operation the spherical rollers are not interfering with the retention element 3.

Instead of having a single auxiliary cage 19 it might be also possible to form the auxiliary cage from separate parts, e.g. frames or brackets which interact with at least one, preferably plurality of spherical rollers 8.

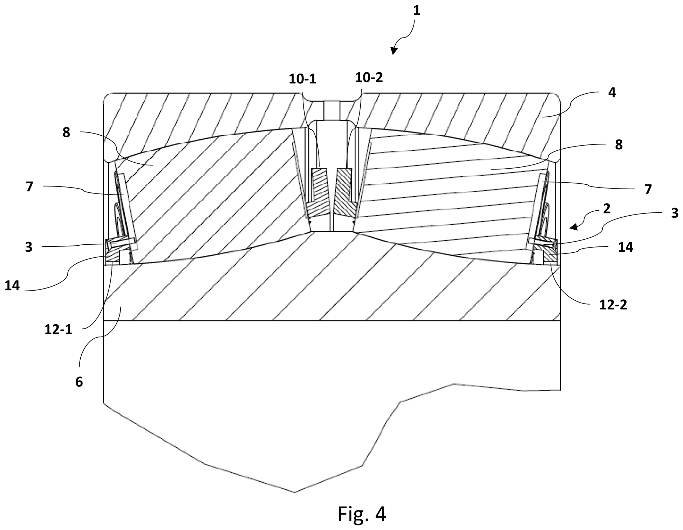

Fig. 4 illustrates a sectional view of further embodiment of the bearing 1, with outer ring 4 not being swiveled out. In this embodiment, cage 2 is equipped with a retention element 3 that is configured as a separate component in form of a screw, and the spherical rollers 8 are equipped with a roller dimple 7, wherein the screw 3 is designed to interact with the roller dimple 7 of the spherical rollers 8 to securely hold the spherical rollers 8 in place. During manufacturing, each screw 3 may be easily fastened to the cage in such a way that they extend into the indentation of the roller dimple 7, after the corresponding spherical roller 8 is fully seated within the pockets 16. The screw may be secured to either at least one of the outer cage rings 12-1 or 12-2, or to cage 2, which then extends into the roller dimple 7. Thus, the retention element 3 holds the spherical rollers 8 in place without causing wear or damage, while facilitating the smooth and unobstructed placement of the spherical rollers 8 into pockets 16.

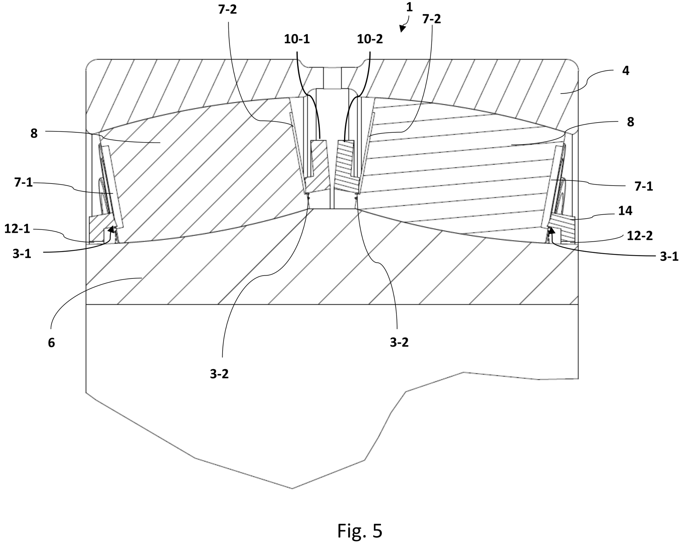

Further, Fig. 5 depicts a sectional view of a further preferred embodiment of the bearing 1, wherein cage 2 of bearing 1 is equipped with a retention element 3 in the form of lug. In the illustrated embodiment, each pocket 16 is equipped with two lugs 3-1, 3-2. However, it is also possible that only a single lug or more than two lugs may be provided. The lug 3 is configured to protrude from the axial outer cage rings 12-1, and 12-2 to interact with the corresponding roller dimple 7 on the side face of the spherical rollers 8 to lock the spherical roller in place. Additionally, and in contrast to the embodiment shown in Fig. 4, the lug is interacting with the spherical roller 8 on both side faces of the spherical roller 8. For that, the spherical roller 8 has dimples 7-1 7-2 on both sides with which the lug may interact. However, also the screws could be arranged on both sides of the roller and extend into the respective dimple. Even if the dimples may have the same size, it might be also preferred that the dimples on the inner sides 7-2 facing each other are shallower than the dimples on the outer sides 7-1, as is illustrated in Fig. 5.

Alternatively, the lug may protrude or extend from the cage bars 14-1, 14-2 of cage 2 to interact with the spherical rollers 8 (not shown).

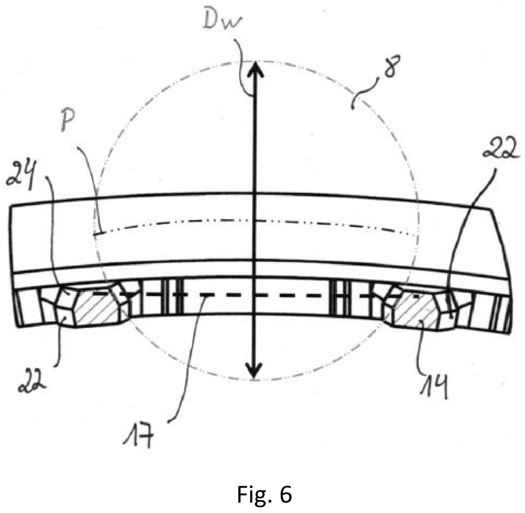

Further, Figs. 6 to 8 shows further features of the first cage element 2-1 in detail, without illustrating the retention element for the sake of simplicity.

Fig. 6 illustrates a sectional view of a large-scale spherical roller bearing according to the first embodiment. It is depicted in Fig 6, that the cage bar 14 is arranged such that a contact between the spherical roller 8 and the cage bar 14 is at a position that corresponds to about 30% of a maximal diameter Dw (as indicated by dashed line 17) of the spherical roller 8. The maximal diameter Dw of the spherical roller 8 is indicated in Fig. 6.

Arranging the cage bars 14 offset to the pitch diameter P may allow to decrease a minimal distance Dm between the raceways of two neighboring rollers 8 such that it may be possible to increase the number of rollers used in a set of rollers 8, as shown in Fig. 6. The minimal distance Dm is determined in a condition in which the spherical rollers 8 are equally spaced in the circumferential direction.

In particular, a ratio Dm/Dw of the minimal distance in the circumferential direction between the raceways of two neighboring spherical rollers 8 of the first and/or second set of spherical rollers to the maximal roller diameter Dw is equal to or below 0.11, preferably 0.09, and even more preferred 0.075, when the spherical rollers 8 of the respective set of rollers 8 are equally spaced in the circumferentially direction.

Alternatively, or additionally, the minimal distance Dm in the circumferential direction between the raceways of two neighboring spherical rollers of the first and/or second set of spherical rollers may be equal to or below a value obtained by the following equation: $Dm \leq 0.0064 mm ⋅ {\left(ln \left(P⋅Dw+Dw\right)\right)}^{3}$ when the spherical rollers 8 of the respective set of rollers 8 are equally spaced in the circumferentially direction, wherein P is the pitch diameter and Dw is the maximal roller diameter, wherein the millimeter values of P and Dw are to be used as dimensionless variables.

Further, the spherical roller bearing 1 is designed such that a shoulder clearance is larger than a radial cage clearance. For example, the shoulder clearance may be between 1 and 15 mm larger than the radial cage clearance, if the cage bore diameter up to 1200mm. In case the cage bore diameter is larger than 1200mm, the shoulder clearance may be between 1 and 20 mm larger than the radial cage clearance. This allows to design the cage 2 predominantly roller guided. Furthermore Fig. 6 depicts an embodiment of the cage bars 14, wherein each cage bar 14 is provided with a contact surface 24 configured to contact the spherical roller 8, wherein the contact surface 24 is positioned at a circumferential side face of each cage bar 14. The contact surface 24 is provided with a radius such that an osculation is formed between the cage bar 14 and the roller 8 along the roller axis. The osculation, which is the radius on cage bar 14 divided by a crowning radius of the roller, may be between 100% and 104%. Moreover, each cage bar 14 has in the axial direction one contact area 24.

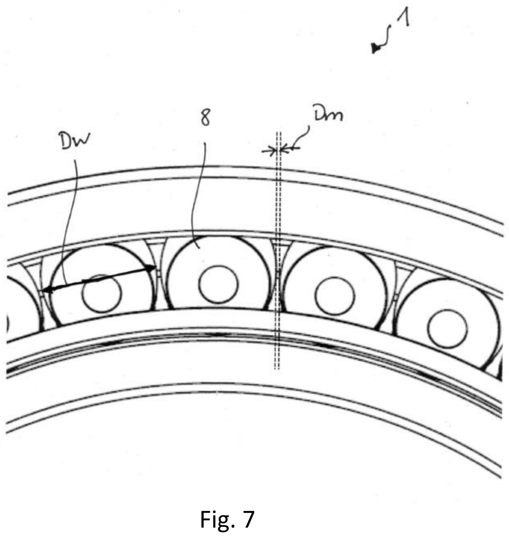

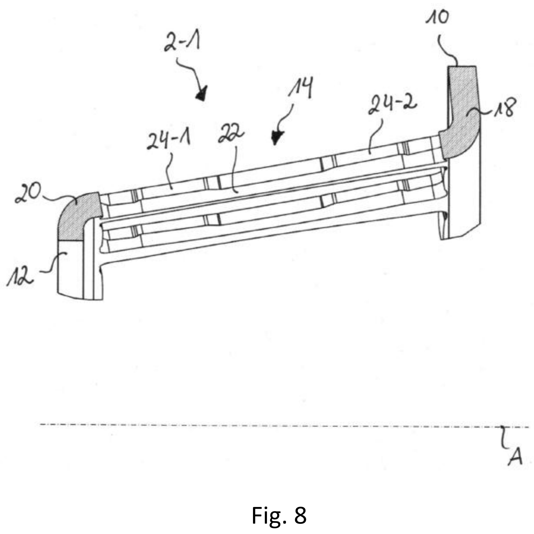

Fig. 7 shows a cross section of a cage 2 for a spherical roller bearing 1 according to a further embodiment of the cage bars 14. The cage 2 of this embodiment differs from the cage 2 illustrated in Fig. 7 in that a circumferential side face 22 of each cage bar 14 is provided in the axial direction with two contact areas 24-1, 24-2 configured to contact the roller. Although, Fig.8 shows an embodiment having two contact areas 24-1, 24-2 it may also be possible to provide more than two contact areas.

In summary, the large-scale spherical roller bearing 1 is provided with at least one retention element 3 to securely hold the spherical rollers 8 within the pockets 16 of at least one cage 2, preventing them from falling out. The retention element 3 may be integrated with cage 2 or provided as a separate component attached to the cage 2. The use of a retention element 3 may eliminate the need for additional guiding rings or retaining flanges on the inner rings 10 to retain the spherical rollers 8, reducing the amount of raw material needed for manufacturing the inner ring 6. Furthermore, the retention element 3 may be provided only at one of the axial outer cage rings 12-1, 12-2, allowing for swiveling out the outer ring e.g. for easy exchange of spherical rollers 8 or maintenance reasons.

### Reference numerals

- 1: spherical roller bearing
- 2: cage
- 2-1, 2-2: cage element
- 3: retention element
- 4: outer ring
- 5: opening
- 6: inner ring
- 7, 7-1, 7-2: roller dimples or recess
- 8: spherical roller
- 9: outer raceway
- 10: axial inner cage ring
- 10-1: first ring element
- 10-2: second ring element
- 11: inner raceway
- 12-1, 12-2: axial outer cage ring
- 13: gap
- 14: cage bar
- 15: auxiliary cage ring
- 16: pocket
- 17: line
- 18: flange element
- 19: auxiliary cage
- 20: flange element
- 22: circumferential side face
- 24: contact area

- A: rotational axis
- P: pitch diameter
- Dw: maximal roller diameter
- Dm: minimal distance between two rollers

## Claims

1. Large scale spherical roller bearing (1) for supporting a main shaft of a power plant turbine, comprising:
at least an outer ring (4), and an inner ring (6), wherein the inner ring (6) has a bore having a diameter of at least 499mm,
two set of spherical rollers (8) which are rolling along raceways (9, 11) formed on the outer and inner ring (4, 6), and
at least one cage (2, 2-1, 2-2) configured to retain the rollers (8), wherein the at least one cage (2, 2-1, 2-2) comprises at least one axial inner cage ring (10) extending in a circumferential direction of the spherical roller bearing (1), a first axial outer cage ring (12-1) spaced from the at least one axial inner cage ring (10) on a first axial side and connected to it with a plurality of cage bars (14) thereby forming closed pockets (16), wherein each pocket (16) is configured to receive one spherical roller (8) of the first set of rollers, and a second axial outer cage ring (12-2) spaced from the at least one axial inner cage ring (10) on a second axial side opposite of the first axial side and connected to it with a plurality of cage bars (14) thereby forming closed pockets (16), wherein each pocket (16) is configured to receive one spherical roller (8) of the second set of rollers, wherein the cage bars (14) are at least partially arranged at a position in a radial direction that is offset to a pitch diameter (P), preferably at least partially arranged on a radially inner side of the pitch diameter (P),
**characterized in that**,
at least one cage is provided with at least one retention element (3) for securely holding the spherical rollers (8) in the pockets (16) of the at least one cage (2, 2-1, 2-2).

2. Spherical roller bearing (1) according to claim 1, wherein a ratio Dm/Dw of a minimal distance Dm in the circumferential direction between the raceways of two neighboring spherical rollers (8) of at least one set of spherical rollers to a maximal roller diameter Dw is equal to or below 0.11, preferably 0.09, and even more preferred 0.075, when the spherical rollers (8) of the at least one set of spherical rollers are equally spaced in the circumferential direction.

3. Spherical roller bearing (1) according to claim 1 or 2, wherein a minimal distance Dm in the circumferential direction between the raceways of two neighboring spherical rollers (8) of the at least one set of spherical rollers is equal to or below a value obtained by the following equation: $Dm \leq 0.0064 mm ⋅ {\left(ln \left(P⋅Dw+Dw\right)\right)}^{3}$ wherein the spherical rollers (8) of the at least one set of spherical rollers are equally spaced in the circumferential direction, wherein P is the pitch diameter and Dw is the maximal roller diameter, wherein the millimeter values of P and Dw are to be used as dimensionless variables.

4. Spherical roller bearing (1) according to any one of the preceding claims, wherein the at least one retention element (3) is integrally formed with the at least one cage (2), and/or wherein the at least one retention element (3) is a separate component attached to the at least one cage (2).

5. Spherical roller bearing (1) according to any one of the preceding claims, wherein the at least one retention element (3) extends from the at least one cage rings (10,12).

6. Spherical roller bearing (1) according to any one of the preceding claims, wherein the retention element (3) interacts with the raceway of at least one spherical roller element (8), wherein in particularly the retention element (3) extends at least partially in an axial direction parallel to the cage bars (14), wherein the partially extending region of the retention element (3) is positioned at a distance from the pitch diameter (P) on the side opposite to the cage bar (14), preferably at a radially outer position of the pitch diameter (P).

7. Spherical roller bearing (1) according to claim 6, wherein between two adjacent spherical roller elements (8) a single retention element (3) is arranged, wherein preferably a circumferential thickness of the at least one retention element (3) is adapted to allow free movement of the spherical rollers (8) in operation of the spherical roller bearing (1).

8. Spherical roller bearing (1) according to any one of the previous claims, wherein the at least one retention element (3) interacts with at least one side face of the spherical rollers (8).

9. Spherical roller bearing (1) according to any one of the previous claims, wherein at least one side face of at least one spherical roller (8) is equipped with a roller dimple (7), and the retention element (3) extends axially from at least one of the cage rings (10,12) and is adapted to engage with the at least one roller dimple of the spherical rollers (8).

10. Spherical roller bearing (1) according to any one of the previous claims, wherein the retention element (3) is at least partially elastically or plastically deformable.

11. Spherical roller bearing (1) according to any one of the previous claims, wherein the inner ring (6) is not provided with a flange configured to retain and/or guide the spherical rollers (8).

12. Spherical roller bearing (1) according to any one of the previous claims, wherein the axial inner cage ring (10) comprises a first ring element (10-1) and a second ring element (10-2) which are separated from each other.

13. Spherical roller bearing (1) according to any one of the previous claims, wherein the axial inner cage ring (10) is arranged on an axially inner side of the spherical roller bearing (1) such that a gap (13) is formed at least partially between the first ring element (10-1) and the second ring element (10-2).

14. Spherical roller bearing (1) according to claims 1 to 10, wherein the axial inner cage ring (10) comprises a first ring element (10-1) and a second ring element (10-2) which are fixed to each other.
